# EUROPÄISCHE PATENTSCHRIFT

(11) **EP 2 191 637 B1**
(45) Veröffentlichungstag und Bekanntmachung des Hinweises auf die Patenterteilung: **05.06.2013**
(21) Anmeldenummer: 08787521.7
(22) Anmeldetag: 27.08.2008
(51) Int. Cl.: H04M 3/56

(54) **VERFAHREN UND KOMMUNIKATIONSEINRICHTUNG ZUM BEREITSTELLEN VON TELEFONKONFERENZEN**
METHOD AND COMMUNICATION DEVICE FOR PROVIDING TELEPHONE CONFERENCES
PROCÉDÉ ET SYSTÈME DE COMMUNICATION POUR EFFECTUER DES TÉLÉCONFÉRENCES

(30) Priorität: 18.09.2007 DE 102007044408
(43) Veröffentlichungstag der Anmeldung: 02.06.2010
(73) Patentinhaber: Siemens Enterprise Communications GmbH & Co. KG, 81379 München (DE)
(72) Erfinder: LEDERER, Thomas, 82211 Herrsching (DE)
(74) Vertreter: Fritzsche, Thomas
(86) Internationale Anmeldenummer: PCT/EP2008/061228
(87) Internationale Veröffentlichungsnummer: WO 2009/037078

(56) Entgegenhaltungen:
- EP-A- 1 098 504
- US-A1- 2003 055 899
- US-A1- 2008 069 328

## Beschreibung

Die Erfindung betrifft ein Verfahren zum Bereitstellen von Telefonkonferenzen gemäß dem Gattungsbegriff des Anspruchs 1 sowie eine Kommunikationseinrichtung gemäß dem Oberbegriff des Anspruchs 19.

Telefonkonferenzen sind bekannte Anwendungen in Telekommunikationssystemen, die insbesondere im beruflichen Umfeld häufig zur Anwendung kommen.

Ab einer gewissen Teilnehmerzahl, in der Regel ab vier beteiligten Endgeräten, erfordert eine Konferenz spezielle Hard- und Software, wie beispielweise Konferenzbrücken, in die sich zum Bilden einer Telefonkonferenz die Teilnehmer einwählen.

Diese Brücke kann dabei ein Arbeitsplatztelefon oder aber ein separates Telefon in einem Besprechungsraum sein. Daher kommt es häufig vor, dass von Konferenz zu Konferenz die zur Einwahl erforderliche Telefonnummer wechselt. Da diese aber bekannt sein muss, damit die Konferenz etabliert werden kann, wird die aktuelle Nummer häufig gesucht und manuell am Telefon eingegeben, wobei oft noch unter Umständen ein hierfür vorgesehener, in der Regel in der Nachwahl einzugebender, Einwahl-Code ebenfalls bekannt sein muss.

In EP 1 098 504 A2 ist ein Verfahren zur Bereitstellung eines datennetzunterstützten Konferenzservices für ein mobiles Endgerät beschrieben. Konferenzbezogene Information wird von einem Konferenzeinladenden erhalten und gespeichert. Vor dem Termin zur Einrichtung der Konferenz wird eine Nachricht zur Konferenzmitteilung zum mobilen Endgerät geschickt. Von dem mobilen Endgerät wird eine Aufforderung zum Aufbau einer Konferenzverbindung in Erwiderung auf die Nachricht zur Konferenzmitteilung gesendet. Daraufhin wird eine Konferenzverbindung zwischen dem mobilen Endgerät und einer Konferenzbrücke hergestellt, die alle Konferenzteilnehmer miteinander verbindet.

In US 2003/0055899 A1 ist ein Verfahren zum Aufbau einer Konferenzschaltung beschrieben, bei dem eine Konferenzaufbaueinrichtung eine zentrale Steuereinrichtung, eine Konferenzspeichereinrichtung mit einer Adresstabelle, und eine Verbindungssteuerung umfasst. Durch die zentrale Steuereinrichtung wird eine Auslöseinformation mit einer Konferenzkennung als solche erkannt. Die Konferenzkennung wird aus der Auslöseinformation extrahiert und zur Konferenzspeichereinrichtung übermittelt. Durch die Übermittlung der Konferenzkennung wird ein Abruf der dieser Konferenzkennung in der Adresstabelle zugeordneten Rufnummern veranlasst. Daraufhin wird ein Aufbau der Konferenzschaltung durch die Verbindungssteuerung ausgelöst.

Die der Erfindung zugrunde liegende Aufgabe ist es, ein Verfahren sowie eine Anordnung zum vereinfachten Bereitstellen einer Telefonkonferenz anzugeben, welche die oben genannten Nachteile überwindet.

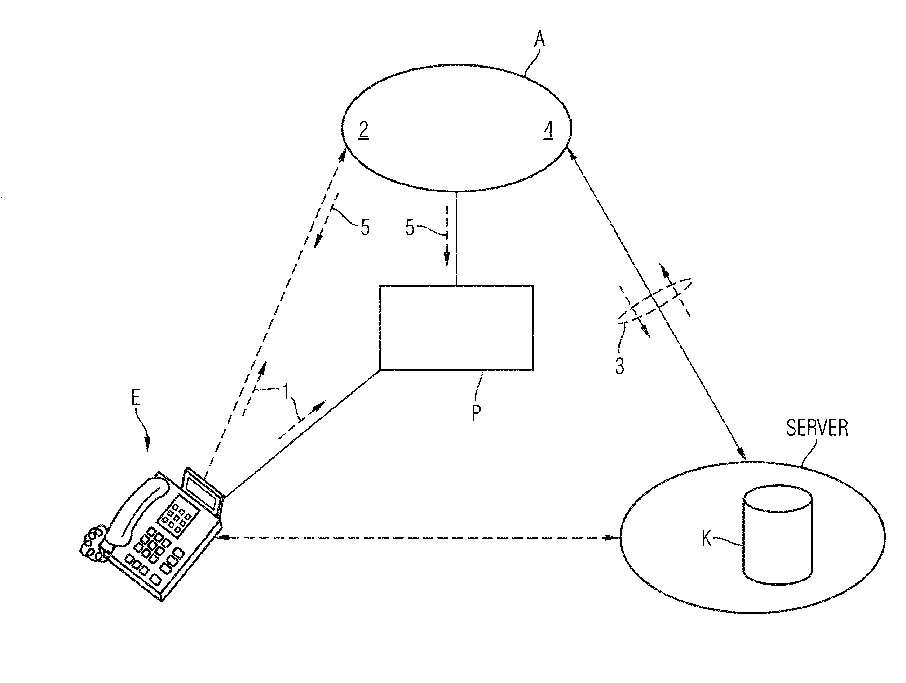

Gelöst wird die Aufgabe durch die Merkmale gemäß dem Verfahrensanspruch 1 sowie ausgehend von dem Oberbegriff des Anordnungsanspruchs 15 durch dessen kennzeichnende Merkmale. Weitere Einzelheiten der Erfindung sowie Vorteile werden ausgehend von einem in der einzigen Figur dargestellten Ausführungsbeispiel der Erfindung näher erläutert. Dabei zeigt die
- Figur: eine schematische Darstellung eines Ausführungsbeispiels des erfindungsgemäßen Verfahrens.

In der Figur ist schematisch ein Ausführungsbeispiel des erfindungsgemäßen Verfahrens dargestellt. Zu erkennen ist ein Teilnehmerendgerät E, welches beispielsweise ein Telefon sein kann, welche neben den regulären Tastenbelegungen bzw. den Tastaturfeldern von Standardtelefonen auch zumindest eine Tastaturfunktion bzw. eine weitere Taste aufweist, welche eine Konferenz einleitet. Diese gemäß der Erfindung ausgestaltete Taste bzw. Funktion zeichnet sich dabei dadurch aus, dass ein Einwählen zum Etablieren einer Konferenz mit einer zu dem Zeitpunkt des Tastendrucks ermittelten Rufnummer aus beispielsweise dem assoziierten Kalender ausgelöst werden kann.

Im Einzelnen werden dabei folgende Schritte durchgeführt. Nach einem Tastendruck wird dieser Tastendruck zu einem ersten Zeitpunkt 1 an eine Vermittlungseinrichtung P, welche z.B. eine rein softwarebasierte Vermittlungseinrichtung, eine sogenannte Softswitch oder eine hardwarebasierte Lösung, wie eine übliche Vermittlungsstelle sein kann, übertragen.

Diese leitet dann die Information an eine Applikation A weiter. Alternativ kann der Tastendruck zu dem ersten Zeitpunkt 1 auch direkt vom Endgerät E an die Applikation A gemeldet werden. Die Applikation A ermittelt nun zu einem zweiten Zeitpunkt 2 aus einer Zuordnungstabelle einen Terminkalender K, der dem Endgerät E zugeordnet ist und holt sich den zu diesem Zeitpunkt aktuellen Terminkalendereintrag.

In einem nächsten Schritt ermittelt dann zu einem vierten Zeitpunkt 4 die Applikation A aus dem Inhalt des Eintrags die Einwahlinformation beispielsweise die Telefonnummer oder einen hierzu erforderlichen Code bzw. beides und gibt sie über eine Schnittstelle beispielsweise eine CTI-Schnittstelle (CSTA) über das Vermittlungssystem P als einen Auftrag zum Wählen der Rufnummer sowie der Nachwahl des Codes zu einem fünften Zeitpunkt 5 an die Vermittlungsstelle weiter. Dies kann ebenfalls alternativ auch direkt an das Endgerät E übertragen werden, so dass die Konferenz eingeleitet werden kann.

Mit dem erfindungsgemäßen Verfahren wird also ein automatisches Ermitteln der Einwahlrufnummer aus einem elektronischen Terminkalender, wobei dies zum Beispiel aus der elektronisch übermittelten Einladung zur Besprechung erfolgen kann und wobei dies erfindungsgemäß auch durch Zugriff auf ein Adressbuch, beispielsweise unter Nutzung des so genannten "Lightweight Directory Access Protocol" (LDAP) Protokolls.

In der Regel hat sowohl der Konferenzteilnehmer einen Eintrag im elektronischen Terminkalender, wie zum Beispiel durch die Applikation "Outlook" oder "Lotus Notes" bereitgestellt, als auch der Besprechungsraum einen zugewiesenen Kalender.

Der Raum wird erfindungsgemäß ebenso zur Besprechung eingeladen, d.h. im Terminkalender befindet sich die Einladung mit Angabe der Einwahldaten, falls die Telefon-Konferenz im Besprechungsraum stattfindet.

Das Drücken der erfindungsgemäßen quasi "intelligenten Konferenztaste" am Arbeitsplatztelefon bzw. am Telefon im Konferenzraum hat den Vorteil, das nun einfach das Einwählen mit der aus dem zu dem Zeitpunkt des Tastendrucks ermittelten Rufnummer aus dem assoziierten Kalender ausgelöst werden kann.

Alternativ oder ergänzend können, falls es weitere Angaben wie beispielsweise den erforderlichen Code gibt, die der Konferenz-Brücke übermittelt werden muss, diese erfindungsgemäß auf dem Display des Endgerätes angezeigt bzw. alternativ oder ergänzend automatisch in einer Nachwahl, dass heißt im Anschluss an die Zielwahleingabe, übermittelt bzw. eingegeben werden.

Eine weitere nicht dargestellte alternative oder ergänzende Ausgestaltung besteht darin, dass erfindungsgemäß ein automatisches, zeitgesteuertes Vorprogrammieren der erfindungsgemäßen Konferenztaste erfolgt.

D.h. eine Applikation A ermittelt in regelmäßigen Abständen die Terminbucheinträge und programmiert die Konferenztaste des Endgerätes E.

Alternativ kann die Applikation A dies gemäß einer Weiterbildung auch für mehrere Telefone übernehmen.

Durch das automatische Einwählen in die zu dem Zeitpunkt aktuelle Telefonkonferenz ergibt sich ein Vorteil hinsichtlich Bedienungskomfort sowie Zeiteinsparung. Es entfällt ein umständliches Aufsuchen der Telefonkonferenzrufnummer und wird auf ein einfaches Starten mittels Tastendruck reduziert.

Die Erfindung ist dabei nicht auf Konferenzen mit mindestens drei Teilnehmern beschränkt. Vielmehr kann dies für mittels den genannten Kalenderapplikationen vereinbarten Besprechungen zwischen zwei Kollegen, d.h. quasi eine Zweierkonferenz, auch ohne weiteres auf vorteilhafte Weise eingesetzt werden.

Bei dem erfindungsgemäßen Verfahren zum Bereitstellen einer Telefonkonferenz zwischen einer ersten Kommunikationseinrichtung und zumindest einer zweiten Kommunikationseinrichtung eines Kommunikationsnetzes, bei dem bei Erfassen eine Konferenz einleitender Tastendruck einer zweiten Kommunikationseinrichtung aufgrund des Erfassungszeitpunkts im Kommunikationsnetz hinterlegte Einwahldaten zur Etablierung einer Konferenz ermittelt werden, die zweite Kommunikationseinrichtung einen Verbindungsversuch zur ersten Kommunikationseinrichtung initiiert und auf Grundlage der Einwahldaten eine Verbindung zur Durchführung der Konferenz hergestellt wird.

Der Vorteil des erfindungsgemäßen Verfahrens besteht darin, dass eine manuelle Eingabe von Einwahldaten für die Etablierung einer Konferenz nicht mehr erforderlich ist und zudem die Fehlerwahrscheinlichkeit bei der Eingabe bzw. die hierdurch hervorgerufenen Fehlversuche minimiert werden. Ferner ist ein Suchen der Einwahldaten seitens einer der beteiligten Konferenzteilnehmer nicht mehr erforderlich.

Vorzugsweise werden dabei die Einwahldaten aus zumindest einem dem Kommunikationsnetz verfügbaren Datenspeicher ermittelt, wobei dies den Vorteil hat, dass die Daten bereits zu einem früheren Zeitpunkt in dem Datenspeicher abgelegt und vorgehalten werden können.

Dabei ist es weiterhin von Vorteil, dass als Datenspeicher eine über eine Schnittstelle mit der zweiten Kommunikationseinrichtung verbundene Speichereinrichtung betrieben wird. Hierdurch wird es möglich, dass seitens der zweiten Kommunikationseinrichtung verfügbare Informationen bezüglich der Einwahldaten mittels der Schnittstelle auf die Speichereinrichtung übertragen werden können, so dass z.B. der Nutzer der zweiten Kommunikationseinrichtung die Einwahldaten zu einem früheren Zeitpunkt, beispielsweise wenn er die Einladung zu der Konferenz erhalten hat, diese Daten umgehend über die zweite Kommunikationseinrichtung auf der Speichereinrichtung für den späteren automatischen Etablierungsvorgang vorhält.

Von Vorteil ist es auch, wenn gemäß einer Weiterbildung der Datenspeicher durch einen über die Schnittstelle mit der zweiten Kommunikationseinrichtung kommunizierenden Rechner betrieben wird. Hierdurch ist es beispielsweise möglich, dem Benutzer der zweiten Kommunikationseinrichtung auf dem Wege der elektronischen Kommunikation übermittelte Daten direkt zu extrahieren und über die Schnittstelleneinrichtung auf der Speichereinrichtung bzw. den Datenspeicher für die spätere Verwendung abzulegen. Genauso bietet dies auch die Möglichkeit erweiterter Editierungen.

Dabei ist es von Vorteil, wenn die Einwahldaten derart organisiert im Datenspeicher abgelegt werden, dass sie aufgrund einer die Identität der zweiten Kommunikationseinrichtung wiedergebenden Information und/oder Zeitpunkts ermittelt werden. Hierdurch ist eine einfache aber effektive Möglichkeit gegeben, die zum Erfassungszeitpunkt gültigen Einwahldaten zu ermitteln.

Vorzugsweise erfolgt dies dabei als Zuordnungstabelle.

Alternativ ist es auch von Vorteil, als Datenspeicher eine der zweiten Kommunikationseinrichtung integrierte Speichereinrichtung zu betreiben. So ist man unabhängig von weiteren Geräten und eine Zuordnung zur zweiten Kommunikationseinrichtung ist schon allein durch diese Ablage gegeben, so dass lediglich eine Auswertung des Zeitpunkts der Erfassung des Tastendrucks erforderlich ist, um die richtigen Einwahldaten zu ermitteln.

Von besonderem Vorteil ist es dabei, wenn das Hinterlegen auf Grundlage einer Kalenderfunktion verwirklichenden Applikation durchgeführt wird. Hierdurch wird es nämlich möglich, auf einfache Weise aus den Kalenderdaten die Zuordnung von Zeitpunkt und vorgesehener Konferenz zu extrahieren. Ferner können auch die Einwahldaten aus den Kalenderdaten ermittelt werden, denn in der Regel wird eine Einladung für eine Konferenz auch die Einwahldaten als Information enthalten.

Alternativ oder ergänzend ist es auch von Vorteil, dass die erste Kommunikationseinrichtung und/oder die zweite Kommunikationseinrichtung über eine Vermittlungsstelle mit der Applikation kommunizieren. Hierdurch kann eine zentral verwaltete Kalenderfunktion der Hinterlegung zugrunde gelegt werden, so dass die einzelnen Endgeräte keiner weiteren umfassenderen Änderung oder Anpassung bedürfen, um das erfindungsgemäße Verfahren zu verwirklichen.

Alternativ hierzu kann es auch von Vorteil sein, dass die erste und/oder zweite Kommunikationseinrichtung direkt mit der Applikation kommunizieren, wobei vorzugsweise die Applikation auf dem über die Schnittstelle mit der zweiten Kommunikationseinrichtung kommunizierenden Rechner ausgeführt wird. Hierdurch wird es möglich, übliche Kalender- bzw. Organizer-Funktionen, welche auf einem Benutzer zum eigenen Rechner typischerweise ablaufen, wie z.B. Outlook oder Lotus Notes als Grundlage für die Hinterlegung zu verwenden.

Alternativ hierzu kann das Hinterlegen auch auf Grundlage einer Benutzereingabe von Termindaten erfolgen. Dies hat den Vorteil, dass keine weiteren Geräte außer den Telekommunikationsendgeräten für das erfindungsgemäße Verfahren notwendig sind und dennoch der Vorteil der automatischen Einwahl zu einem typischerweise späteren Zeitpunkt erfolgenden Konferenz automatisch initiiert wird.

Alternativ oder ergänzend ist es von Vorteil, dass eine Programmierung der Taste derart erfolgt, dass in determinierten Zeitabständen die Einwahldaten von der Applikation bezogen und derart hinterlegt werden, dass sie zum Erfassungszeitpunkt der Taste zugeordnet sind. Hierdurch wird eine schnellere Verarbeitung gewährleistet, da bereits zum Erfassungszeitpunkt die Einwahldaten lediglich aus dem für die Programmierung der Taste bestimmten Speicher ausgelesen und unmittelbar zum Einsatz gebracht werden können. Ferner ermöglicht es ein automatisches Aktualisieren und zeitgesteuertes Vorprogrammieren der Konferenztaste.

Vorzugsweise ist für das erfindungsgemäße Verfahren von Vorteil, wenn die Schnittstelle als Computer Telephony Integration insbesondere gemäß dem Computer Supported Telecommunications Applications CSTA Protokoll betrieben wird, da hierdurch eine standardisierte Kommunikationsmöglichkeit zwischen einem Telekommunikationsendgerät und einer Rechnereinrichtung realisiert wird.

Ferner ist es bevorzugt, den Zugriff auf den Datenspeicher gemäß dem Lightweight Directory Access Protocol LDAP Protokoll durchzuführen, was ebenfalls den Vorteil der Ausnutzung standardisierter und vor allem verbreiterter Schnittstellen unterstützt.

Ferner ist es von Vorteil, wenn die Einwahldaten derart gebildet werden, dass sie die Rufnummer der ersten Kommunikationseinrichtung enthalten, wobei die Einwahldaten alternativ oder ergänzend derart gebildet werden können, dass sie einen zur Etablierung der Konferenz erforderlichen Code enthalten.

Von Vorteil ist es auch, dass der Code auf einer Anzeigeeinrichtung des zweiten Kommunikationsgerätes ausgegeben wird. Hierdurch wird dem Rechnung getragen, dass es Systeme gibt, die zur Aufforderung des Codes aufrufen und so eine automatische Eingabe des Codes im Rahmen einer Nachwahl nicht ohne weiteres möglich ist, sondern der manuellen Zuführung überlassen werden muss.

## Patentansprüche

1. Verfahren zum Bereitstellen einer Telefonkonferenz zwischen einer ersten Kommunikationseinrichtung und zumindest einer zweiten Kommunikationseinrichtung (E) eines Kommunikationsnetzes, bei dem bei Erfassung eines eine Konferenz einleitenden Tastendrucks an der zweiten Kommunikationseinrichtung (E)
a) aufgrund des Erfassungszeitpunkts (1) im Kommunikationsnetz hinterlegte Einwahldaten zur Etablierung einer Konferenz ermittelt werden, wobei das Hinterlegen auf Grundlage einer eine Kalenderfunktion (K) verwirklichenden Applikation (A) durchgeführt wird oder das Hinterlegen auf Grundlage einer Benutzereingabe von Termindaten erfolgt,
b) die zweite Kommunikationseinrichtung (E) einen Verbindungsversuch zur ersten Kommunikationseinrichtung initiiert,
c) auf Grundlage der Einwahldaten eine Verbindung zur Durchführung der Konferenz hergestellt wird.

2. Verfahren nach Anspruch 1, **dadurch gekennzeichnet, dass** die Einwahldaten aus zumindest einem dem Kommunikationsnetz verfügbaren Datenspeicher ermittelt werden.

3. Verfahren nach dem vorhergehenden Anspruch, **dadurch gekennzeichnet, dass** als Datenspeicher eine über eine Schnittstelle mit der zweiten Kommunikationseinrichtung (E) verbundene Speichereinrichtung betrieben wird.

4. Verfahren nach dem vorhergehenden Anspruch, **dadurch gekennzeichnet, dass** der Datenspeicher durch einen über die Schnittstelle mit der zweiten Kommunikationseinrichtung (E) kommunizierenden Rechner betrieben wird.

5. Verfahren nach dem vorhergehenden Anspruch, **dadurch gekennzeichnet, dass** die Einwahldaten derart organisiert im Datenspeicher abgelegt werden, dass sie aufgrund einer die Identität der zweiten Kommunikationseinrichtung (E) wiedergebenden Information und/oder Zeitpunkts ermittelt werden.

6. Verfahren nach dem vorhergehenden Anspruch, **dadurch gekennzeichnet, dass** die Einwahldaten als Zuordnungstabelle im Datenspeicher abgelegt werden.

7. Verfahren nach einem der Ansprüche 1 bis 3, **dadurch gekennzeichnet, dass** als Datenspeicher eine in der zweiten Kommunikationseinrichtung (E) integrierte Speichereinrichtung betrieben wird.

8. Verfahren nach einem der vorhergehenden Ansprüche, **dadurch gekennzeichnet, dass** die erste Kommunikationseinrichtung und/oder die zweite Kommunikationseinrichtung (E) über eine Vermittlungsstelle (P) oder direkt mit der Applikation (A) kommunizieren.

9. Verfahren nach einem der vorhergehenden Ansprüche, **dadurch gekennzeichnet, dass** eine Programmierung der Taste derart erfolgt, dass in determinierten Zeitabständen die Ein-wahldaten von der Applikation (A) bezogen und derart hinterlegt werden, dass sie zum Erfassungszeitpunkt der Taste zugeordnet sind.

10. Verfahren nach einem der vorhergehenden Ansprüche, **dadurch gekennzeichnet, dass** die Schnittstelle als "Computer Telephony Integration" CTI, insbesondere gemäß dem "Computer Supported Telecommunications Applications" CSTA Protokoll, betrieben wird.

11. Verfahren nach einem der vorhergehenden Ansprüche, **dadurch gekennzeichnet, dass** der Zugriff auf den Datenspeicher gemäß dem "Lightweight Directory Access Protocol" LDAP Protokoll erfolgt.

12. Verfahren nach einem der vorhergehenden Ansprüche, **dadurch gekennzeichnet, dass** die Einwahldaten derart gebildet werden, dass sie die Rufnummer der ersten Kommunikationseinrichtung enthalten.

13. Verfahren nach dem vorhergehenden Anspruch, **dadurch gekennzeichnet, dass** die Einwahldaten derart gebildet werden, dass sie einen zur Etablierung der Konferenz erforderlichen Code enthalten.

14. Verfahren nach dem vorhergehenden Anspruch, **dadurch gekennzeichnet, dass** der Code auf einer Anzeigeeinrichtung des zweiten Kommunikationsgerätes ausgegeben wird.

15. Anordnung zum Bereitstellen einer Telefonkonferenz zwischen einer ersten Kommunikationseinrichtung und zumindest einer zweiten Kommunikationseinrichtung (E) eines Kommunikationsnetzes, **gekennzeichnet durch** Mittel zur Durchführung des Verfahrens nach einem der vorhergehenden Ansprüche.

## Claims

1. Method for providing a telephone conference between a first communication device and at least one second communication device (E) in a communication network, in which upon detection of a key being pressed on the second communication device (E) to initiate a conference
a) the time of detection (1) is taken as a basis for ascertaining dial-up data stored in the communication network for the purpose of setting up a conference, wherein the storing is carried out on the basis of an application (A) which implements a calendar function (K) or the storing is performed on the basis of the user inputting calendar data,
b) the second communication device (E) initiates an attempt at a connection to the first communication device,
c) the dial-up data is taken as a basis for setting up a connection to implement the conference.

2. Method according to claim 1, **characterised in that** the dial-up data is ascertained from at least one data store available to the communication network.

3. Method according to the preceding claim, **characterised in that** a storage device, which is connected to the second communication device (E) via an interface, is operated as a data store.

4. Method according to the preceding claim, **characterised in that** the data store is operated by a computer which communicates, via the interface, with the second communication device (E).

5. Method according to the preceding claim, **characterised in that** the dial-up data is deposited in the data store and organised such that it is ascertained based on a piece of information and/or point in time that renders the identity of the second communication device (E).

6. Method according to the preceding claim, **characterised in that** the dial-up data is deposited in the data store as an allocation table.

7. Method according to any one of the claims 1 to 3, **characterised in that** a storage device integrated into the second communication device (E) is operated as a data store.

8. Method according to any one of the preceding claims, **characterised in that** the first communication device and/or the second communication device (E) communicate(s), via a switching facility (P) or directly, with the application (A).

9. Method according to any one of the preceding claims, **characterised in that** the programming of the key is performed such that, at determined time intervals, the dial-up data is obtained by the application (A) and stored such that it is allocated to the key at the time of detection.

10. Method according to any one of the preceding claims, **characterised in that** the interface is operated as "Computer Telephony Integration" (CTI), in particular according to the "Computer Supported Telecommunications Applications" (CSTA) protocol.

11. Method according to any one of the preceding claims, **characterised in that** the data store is accessed according to the "Lightweight Directory Access Protocol" (LDAP) protocol.

12. Method according to any one of the preceding claims, **characterised in that** the dial-up data is formed such that it contains the telephone number of the first communication device.

13. Method according to the preceding claim, **characterised in that** the dial-up data is formed such that it contains a code required for setting up the conference.

14. Method according to the preceding claim, **characterised in that** the code is output on a display device of the second communication device.

15. Arrangement for providing a telephone conference between a first communication device and at least one second communication device (E) in a communication network, **characterised by** means for carrying out the method according to one of the preceding claims.

## Revendications

1. Procédé servant à effectuer une téléconférence entre un premier dispositif de communication et au moins un deuxième dispositif de communication (E) d'un réseau de communication, dans le cadre duquel lorsque que l'enfoncement d'une touche du deuxième dispositif de communication (E) amorçant une conférence est détecté,
a) des données d'entrée en communication enregistrées dans le réseau de communication sur la base du moment où l'enfoncement de la touche est détecté (1) sont déterminées afin de mettre en place une conférence, sachant que l'enregistrement est exécuté sur la base d'une application (A) réalisant une fonction de calendrier (K) ou que l'enregistrement se fait sur la base d'une saisie de données relatives à un rendez-vous par l'utilisateur,
b) le deuxième dispositif de communication (E) lance une tentative de connexion avec le premier dispositif de communication,
c) une connexion est établie sur la base des données d'entrée en communication afin de mettre en oeuvre une conférence.

2. Procédé selon la revendication 1, **caractérisé en ce que** les données d'entrée en communication sont déterminées à partir d'au moins une mémoire de données mise à la disposition du réseau de communication.

3. Procédé selon la revendication précédente, **caractérisé en ce qu'**un dispositif de mémoire relié au deuxième dispositif de communication (E) par l'intermédiaire d'une interface fonctionne en tant que mémoire de données.

4. Procédé selon la revendication précédente, **caractérisé en ce que** la mémoire de données fonctionne grâce à un ordinateur communiquant avec le deuxième dispositif de communication (E) par l'intermédiaire de l'interface.

5. Procédé selon la revendication précédente, **caractérisé en ce que** les données d'entrée en communication sont consignées dans la mémoire de données de manière organisée de telle manière qu'elles sont déterminées sur la base d'une information et/ou d'un moment reproduisant l'identité du deuxième dispositif de communication (E).

6. Procédé selon la revendication précédente, **caractérisé en ce que** les données d'entrée en communication sont consignées dans la mémoire de données sous la forme d'un tableau d'affectation.

7. Procédé selon l'une quelconque des revendications 1 à 3, **caractérisé en ce qu'**un dispositif de mémoire intégré au deuxième dispositif de communication (E) fonctionne comme une mémoire de donnée.

8. Procédé selon l'une quelconque des revendications précédentes, **caractérisé en ce que** le premier dispositif de communication et/ou le deuxième dispositif de communication (E) communiquent par l'intermédiaire d'une station de commutation (P) ou directement avec l'application (A).

9. Procédé selon l'une quelconque des revendications précédentes, **caractérisé en ce qu'**une programmation de la touche est réalisée de telle manière que les données d'entrée en communication sont mémorisées à des intervalles déterminés par l'application en rapport avec le fait que et de telle manière qu'elles sont associées au moment où l'enfoncement de la touche est détecté.

10. Procédé selon l'une quelconque des revendications précédentes, **caractérisé en ce que** l'interface fonctionne comme un couplage téléphonie informatique (CTI, en anglais Computer Telephony Integration), en particulier selon le protocole de communication CSTA (Computer Supported Telecommunications Applications).

11. Procédé selon l'une quelconque des revendications précédentes, **caractérisé en ce que** l'accès à la mémoire de données se fait selon le protocole LDAP (Lightweight Directory Access Protocol, ou protocole d'accès aux annuaires léger).

12. Procédé selon l'une quelconque des revendications précédentes, **caractérisé en ce que** les données d'entrée en communication sont formées de telle manière qu'elles comportent le numéro d'appel du premier dispositif de communication.

13. Procédé selon la revendication précédente, **caractérisé en ce que** les données d'entrée en communication sont formées de telle manière qu'elles comportent un code requis pour mettre en place la conférence.

14. Procédé selon la revendication précédente, **caractérisé en ce que** le code est délivré sur un dispositif d'affichage du deuxième appareil de communication.

15. Ensemble servant à effectuer une téléconférence entre un premier dispositif de communication et au moins un deuxième dispositif de communication (E) d'un réseau de communication, **caractérisé par** des moyens servant à mettre en oeuvre le procédé selon l'une quelconque des revendications précédentes.
